(19) Europäisches Patentamt
European Patent Office
Office européen des brevets

(11) **EP 4 276 951 A1**

(12) **EUROPEAN PATENT APPLICATION**
published in accordance with Art. 153(4) EPC

(43) Date of publication:
**15.11.2023 Bulletin 2023/46**

(21) Application number: **21924976.0**

(22) Date of filing: **26.11.2021**

(51) International Patent Classification (IPC):
$H01M\ 4/525$ (2010.01)    $H01M\ 4/505$ (2010.01)
$H01M\ 4/131$ (2010.01)    $H01M\ 4/62$ (2006.01)
$H01M\ 10/0562$ (2010.01)    $H01M\ 10/052$ (2010.01)
$C01G\ 53/00$ (2006.01)

(52) Cooperative Patent Classification (CPC):
C01G 53/00; H01M 4/131; H01M 4/505;
H01M 4/525; H01M 4/62; H01M 10/052;
H01M 10/0562; Y02E 60/10

(86) International application number:
**PCT/KR2021/017591**

(87) International publication number:
**WO 2022/169080 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.02.2021 KR 20210015885**

(71) Applicant: **Korea Electronics Technology Institute**
**Seongnam-si, Gyeonggi-do 13509 (KR)**

(72) Inventors:
• **CHO, Woo Suk**
  **Seongnam-si, Gyeonggi-do 13599 (KR)**
• **KIM, Kyung Su**
  **Yongin-si, Gyeonggi-do 16930 (KR)**
• **YU, Ji Sang**
  **Seongnam-si, Gyeonggi-do 13600 (KR)**
• **SONG, Jun Ho**
  **Seongnam-si, Gyeonggi-do 13599 (KR)**
• **PARK, Keon Ho**
  **Seongnam-si, Gyeonggi-do 13584 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **POSITIVE ELECTRODE ACTIVE MATERIAL, ALL-SOLID-STATE BATTERY COMPRISING SAME, AND METHOD FOR MANUFACTURING SAME**

(57) The present invention relates to a positive electrode active material, an all-solid-state battery comprising same, and a method for manufacturing same. The positive electrode active material for an all-solid-state battery according to the present invention is a lithium metal oxide in the form of single particles having a particle strength of 300 to 1500 MPa and an average particle diameter of at most 10 μm. Since the positive electrode active material according to the present invention is in the form of single particles having a high particle strength of at least 300 MPa and a small average particle diameter of at most 10 μm as indicated above, cracks do not form or are delayed even when pressure is applied during the manufacture of the positive electrode or structural stress is applied over the lifespan of the battery.

FIG. 1

**Description**

[Technical Field]

The present invention relates to an all-solid-state battery, and more particularly, to a positive electrode active material having high particle strength and a small average particle size, an all-solid-state battery including the same, and a manufacturing method thereof.

[Background Art]

An all-solid-state battery is one in which a flammable organic liquid electrolyte used in a lithium secondary battery is changed to a nonflammable or flame retardant solid electrolyte, and it is attracting attention in anticipation of improved safety and high energy density through the application of new electrode materials. The all-solid-state battery can apply the same positive electrode active material and negative electrode active material as those of a lithium secondary battery, but there is a difference in that a separator and an electrolyte are replaced with a solid electrolyte layer.
In the all-solid-state battery, a positive electrode in which a positive electrode active material and a solid electrolyte are mixed in a certain ratio is implemented in contact with a solid electrolyte layer in order to form a smooth ion conduction channel in the positive electrode.
Since the lithium secondary battery uses a liquid electrolyte, the electrolyte penetrates smoothly into the particles of the positive electrode active material. Thus, in the lithium secondary battery, contact between the positive electrode active material and the electrolyte is evenly made on the surfaces and inside of the particles of the positive electrode active material to form a smooth ion conduction channel.
However, since the positive electrode of the all-solid-state battery forms an ion conduction channel by surface contact between the positive electrode active material and the solid electrolyte, the solid electrolyte cannot penetrate into the particles of the positive electrode active material. That is, since an ion conduction channel is formed between the positive electrode active material and the solid electrolyte only by particle surface contact, if the contact area between the positive electrode active material and the solid electrolyte is not sufficiently secured, it acts as resistance and the degree of capacity realization is poor.
In addition, since the solid electrolyte does not penetrate into the particle unlike the liquid electrolyte, depending on the particle size of the positive electrode active material, a drop in the ability of lithium ion diffusion (i.e., bulk conductivity) within the particle also acts as resistance.

[Related Art Documents]

[Patent Documents]

Korean Patent Publication No. 2020-0021731 (published on March 2, 2020)

[Disclosure]

[Technical Problem]

Due to these complex factors, the existing all-solid-state battery has a problem in that it is difficult to secure the expected high capacity because the performance of the positive electrode is deteriorated. Thus, a technique for solving this problem is required.
Accordingly, an object of the present invention is to provide a positive electrode active material having high discharge capacity, excellent rate characteristics, and long lifespan characteristics, an all-solid-state battery including the same, and a manufacturing method thereof.
Another object of the present invention is to provide a positive electrode active material having high particle strength and a small average particle size, an all-solid-state battery including the same, and a manufacturing method thereof.

[Technical Solution]

In order to accomplish the above objects, the present invention provides a positive electrode active material for an all-solid-state battery, including a lithium metal oxide in the form of a single particle having a particle strength of 300 to 1500 MPa and an average particle size of 10 $\mu$m or less.
The lithium metal oxide may be represented by Chemical Formula below:

[Chemical Formula] $Li_xM_yO_2$

(where M includes at least one selected from Co, Mn, Ni, Al, Fe, V, Zn, Cr, Ti, Ta, Mg, Mo, Zr, W, Sn, Hf, Nd, and Gd, 0<x≤1.5, and 0<y≤1).

The lithium metal oxide may be $LiNi_aCo_bMn_cO_2$ (0.6<_a<_0.9, a+b+c=1).

The lithium metal oxide may have a particle strength of 500 MPa or more and an average particle size of 1 μm to 7 μm.

In addition, the present invention provides a method of manufacturing a positive electrode active material for an all-solid-state battery, the method including preparing a lithium metal oxide raw material by mixing a transition metal composite precursor and a lithium source followed by primary heat treatment; pulverizing the lithium metal oxide raw material; and producing a lithium metal oxide in the form of a single particle having a particle strength of 300 to 1500 MPa and an average particle size of 10 μm or less through secondary heat treatment for the pulverized lithium metal oxide raw material.

The transition metal composite precursor is a spherical transition metal composite hydroxide or transition metal composite carbonate prepared by a co-precipitation method.

The lithium metal oxide raw material is secondary particles having an average particle size of 10 μm or less in which primary particles of hundreds of nanometers are agglomerated.

The lithium metal oxide raw material in which the primary particles are agglomerated may be pulverized through a ball milling process.

The transition metal composite precursor may be $Ni_aCo_bMn_c(OH)_2$ or $Ni_aCo_bMn_cO_2$ (0.6≤a≤0.9, a+b+c=1), and the lithium metal oxide may be $LiNi_aCo_bMn_cO_2$ (0.6≤a≤0.9, a+b+c=1).

In addition, the present invention provides a positive electrode for an all-solid-state battery including a solid electrolyte; a conductive material; and a positive electrode active material of a lithium metal oxide in the form of a single particle having a particle strength of 300 to 1500 MPa and an average particle size of 10 μm or less.

In addition, the present invention provides an all-solid-state battery including the above positive electrode; a solid electrolyte layer; and a negative electrode.

[Advantageous Effects]

The positive electrode active material according to the present invention has a high particle strength and a small average particle size in the form of a single particle, so that it can provide high discharge capacity, excellent rate characteristics, and long lifespan characteristics.

That is, since the positive electrode active material according to the present invention has a high particle strength of 300 MPa or more in the form of single particles, cracks do not occur or are delayed even when pressure applied during manufacturing of the positive electrode or structural stress due to volume contraction and expansion during life progress is applied.

In addition, since the positive electrode active material according to the present invention has an average particle size of 10 μm or less in the form of single particles, the conduction (movement) time of lithium ions is short, thereby providing excellent rate characteristics and long lifespan characteristics.

[Description of Drawings]

FIG. 1 is a cross-sectional view showing an all-solid-state battery according to the present invention.

FIG. 2 is an enlarged view showing portion A of a positive electrode in FIG. 1.

FIG. 3 is a flow chart showing a method of manufacturing a positive electrode active material for an all-solid-state battery according to the present invention.

FIG. 4 is a view showing a change caused by stress acting on a positive electrode active material for an all-solid-state battery according to the prior art and the present invention.

FIG. 5 is a SEM photograph showing a positive electrode active material for an all-solid-state battery according to a comparative example.

FIG. 6 is a SEM photograph showing a positive electrode active material for an all-solid-state battery according to an embodiment.

FIG. 7 is a view showing a conduction process of lithium ions in a positive electrode active material for an all-solid-state battery according to a comparative example.

FIG. 8 is a view showing a conduction process of lithium ions in a positive electrode active material for an all-solid-state battery according to an embodiment.

FIG. 9 is a graph showing charge and discharge curves of an all-solid-state battery including a positive electrode active material according to a comparative example.

FIG. 10 is a graph showing charge and discharge curves of an all-solid-state battery including a positive electrode active material according to an embodiment.

FIG. 11 is a graph showing lifespan characteristics evaluation results of all-solid-state batteries according to a comparative example and an embodiment.

FIG. 12 is a SEM photograph showing a positive electrode active material according to a comparative example after lifespan characteristics evaluation of FIG. 11.

FIG. 13 is a SEM photograph showing a positive electrode active material according to an embodiment after lifespan characteristics evaluation of FIG. 11.

[Mode for Disclosure]

In the following description, only parts necessary to understand embodiments of the present invention will be described, and other parts will not be described to avoid obscuring the subject matter of the present invention.

Terms used herein should not be construed as being limited to their usual or dictionary meanings. In view of the fact that the inventor can appropriately define the meanings of terms in order to describe his/her own invention in the best way, the terms should be interpreted as meanings consistent with the technical idea of the present invention. In addition, the following description and corresponding drawings merely relate to specific embodiments of the present invention and do not represent all the subject matter of the present invention. Therefore, it will be understood that there are various equivalents and modifications of the disclosed embodiments at the time of the present application.

Now, embodiments of the present invention will be described in detail with reference to the accompanying drawings.

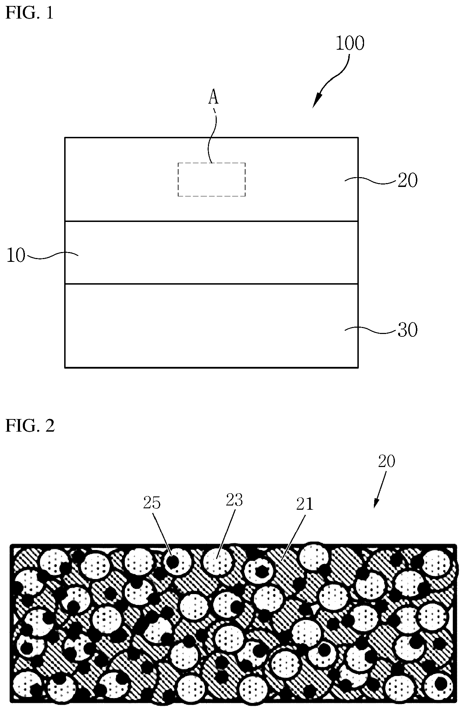

FIG. 1 is a cross-sectional view showing an all-solid-state battery according to the present invention. FIG. 2 is an enlarged view showing portion A of a positive electrode in FIG. 1.

Referring to FIG. 1, an all-solid-state battery 100 according to the present invention includes a solid electrolyte layer 10, and a positive electrode 20 and a negative electrode 30 formed to be in contact with both sides of the solid electrolyte layer 10.

The solid electrolyte layer 10 may include at least one of sulfide-based, oxide-based, and chloride-based solid electrolytes.

Here, the sulfide-based solid electrolyte may be $L_aM_bP_cS_dX_e$ (where L is alkali metal, M includes at least one of B, Al, Ga, In, Si, Ge, Sn, Pb, As, Sb, Bi, Ti, V, Cr, Mn, Fe, Co, Ni, Cu, Y, Zr, Nb, Mo, Tc, Ru, Rh, Pd, Ag, Hf, Ta and W, X includes at least one of F, Cl, Br, I and O, $0 \leq a \leq 12$, $0 \leq b \leq 6$, $0 \leq c \leq 6$, $0 \leq d \leq 12$, and $0 \leq e \leq 9$). Meanwhile, the sulfide-based solid electrolyte may be a plurality of crystalline solid electrolytes, a plurality of amorphous sulfide-based solid electrolytes, or a mixture thereof. For example, as the sulfide-based solid electrolyte, $Li_6PS_5Cl(LPSCl)$, $Li_{10}GeP_2S_{12}(LGPS)$, $Li_2S-P_2S_5(LPS)$ solid solution, and the like may be used.

As the oxide-based solid electrolyte, $Li_{3x}La_{2/3-x}TiO_3(LLTO)$, $Li_7La_3Zr_2O_{12}(LLZO)$, and the like may be used.

In addition, as the chloride-based solid electrolyte, $Li_3YCl_6$, $Li_3YBr_6$, and the like may be used.

The positive electrode 20 includes a positive electrode active material 21, a solid electrolyte 23, and a conductive material 25. The positive electrode 20 may include a binder.

The positive electrode active material 21 is a material that allows intercalation and deintercalation of lithium ions, and includes lithium metal oxide used in lithium secondary batteries. The positive electrode active material 21 according to the present invention is a lithium metal oxide in the form of a single particle having a particle strength of 300 to 1500 MPa and an average particle size of 10 $\mu$m or less. Preferably, a lithium metal oxide having a particle strength of 500 MPa or more and an average particle size of 1 $\mu$m to 7 $\mu$m may be used as the positive electrode active material 21.

The positive electrode active material 21 according to the present invention includes a lithium metal oxide containing at least one of nickel (Ni), manganese (Mn), and cobalt (Co), and can be represented by Chemical Formula 1 below.

[Chemical Formula 1] $\quad\quad Li_xM_yO_2$

(where M includes at least one selected from Co, Mn, Ni, Al, Fe, V, Zn, Cr, Ti, Ta, Mg, Mo, Zr, W, Sn, Hf, Nd, and Gd, $0 < x \leq 1.5$, and $0 < y \leq 1$)

For example, the positive electrode active material 21 may be a Ni-rich layered lithium metal compound with a small particle diameter including nickel (Ni), manganese (Mn), and cobalt (Co). This lithium metal oxide is represented by $LiNi_aCo_bMn_cO_2$ ($0.6 \leq a \leq 0.9$, $a+b+c=1$), and is referred to as a Ni-rich NCM positive electrode active material.

The positive electrode active material 21 according to the present invention may be prepared based on a transition metal composite precursor. The transition metal composite precursor may be a spherical transition metal composite hydroxide or transition metal composite carbonate prepared by a co-precipitation method.

The transition metal composite hydroxide can be expressed as $M_y(OH)_2$ or $M_yO_2$. For example, when the transition metal composite precursor is $Ni_aCo_bMn_c(OH)_2$ or $Ni_aCo_bMn_cO_2$ ($0.6 \leq a \leq 0.9$, a+b+c=1), the lithium metal oxide prepared by the co-precipitation method is $LiNi_aCo_bMn_cO_2$ ($0.6 \leq a \leq 0.9$, a+b+c=1).

The positive electrode active material 21 according to the present invention is a lithium metal oxide prepared by applying a transition metal composite precursor prepared by the co-precipitation method as described above, has an average particle size of 10 $\mu$m or less, and has a single particle form with no interface between particles therein, so that diffusion of lithium ions inside the particle occurs only through grain.

The positive electrode active material 21 according to the present invention has high particle strength of 300 MPa or more, and particle destruction does not occur even when the positive electrode 20 is highly filled (high composite density), so that there is no isolated particle (death area) due to particle destruction. As a result, in the positive electrode active material 21 according to the present invention, particle cracking of the positive electrode active material 21 due to life progression is suppressed, and a high capacity retention rate can be secured.

As such, since the positive electrode active material 21 according to the present invention has a high particle strength and a small average particle size in the form of a single particle, it can provide high discharge capacity, excellent rate characteristics, and long lifespan characteristics.

As the solid electrolyte 23, the solid electrolyte used in the solid electrolyte layer 10 may be used.

The conductive material 25 is not particularly limited as long as it is a conductive material used in a battery. For example, as the conductive material, conductive carbon such as graphene, carbon nanotube, Ketjen black, activated carbon, super-p carbon in a powder form, Denka in a rod form, or vapor grown carbon fiber (VGCF) may be used.

As the binder, a polymer compound such as a fluorine-based, diene-based, acryl-based, or silicone-based polymer may be used. For example, the binder may be nitrile butadiene rubber (NBR), polytetrafluoroethylene (PTFE), polyvinylidene fluoride (PVDF), carboxymethyl cellulose (CMC), styrene butadiene rubber (SBR), or polyimide.

In addition, the negative electrode 30 includes a negative electrode active material, a solid electrolyte, and a conductive material. The negative electrode 30 may include a binder.

The negative electrode active material may be at least one selected from the group consisting of lithium metal, lithium alloy, lithium metal composite oxide, lithium-containing titanium composite oxide (LTO), and combinations thereof.

The solid electrolyte, the conductive material, and the binder used in the positive electrode 20 may also be used in the negative electrode 30, so that a description thereof will be omitted.

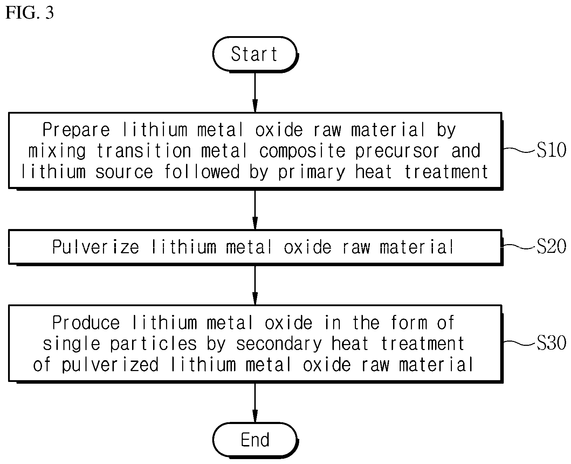

A method of manufacturing a positive electrode active material, as described above, for an all-solid-state battery according to the present invention will be described with reference to FIG. 3. FIG. 3 is a flow chart showing a method of manufacturing a positive electrode active material for an all-solid-state battery according to the present invention.

First, at step S10, a transition metal composite precursor and a lithium source are mixed, followed by primary heat treatment to prepare a lithium metal oxide raw material.

Here, the transition metal composite precursor may be a spherical transition metal composite hydroxide or transition metal composite carbonate prepared by a co-precipitation method.

The primary heat treatment may be performed on a mixture of the transition metal composite precursor and the lithium source at 800 to 900°C in an oxygen atmosphere for 20 to 30 hours. The lithium metal oxide raw material prepared through the primary heat treatment is secondary particles having an average particle size of 10 $\mu$m or less in which primary particles of hundreds of nm are agglomerated.

Next, at step S20, the lithium metal oxide raw material is pulverized. That is, the lithium metal oxide raw material in which the primary particles are agglomerated may be pulverized by employing a ball milling process.

Then, at step S30, the pulverized lithium metal oxide raw material is subjected to secondary heat treatment to produce a lithium metal oxide in the form of a single particle having a particle strength of 300 to 1500 MPa and an average particle size of 10 $\mu$m or less.

The secondary heat treatment is performed in an oxygen atmosphere at a lower temperature than the first heat treatment and for a shorter time than the first heat treatment. That is, the secondary heat treatment may be performed at 600 to 700°C in an oxygen atmosphere for 4 to 10 hours.

As described above, the positive electrode active material according to the present invention can be produced as a lithium metal oxide in the form of a single particle having a particle strength of 300 to 1500 MPa and an average particle size of 10 $\mu$m or less through primary heat treatment, pulverization, and secondary heat treatment.

The reason for using the positive electrode active material having a high particle strength and a small average particle size in the form of a single particle according to the present invention in an all-solid-state battery is as follows.

A typical Ni-rich NCM positive electrode active material is prepared by mixing a spherical transition metal composite precursor, prepared by a co-precipitation method, with a lithium source and heat-treating a mixture. In this case, the typical positive electrode active material maintains the same spherical shape and particle size as those of the transition metal composite precursor. In the typical positive electrode active material, primary particles of hundreds of nm are agglomerated to form spherical secondary particles.

As described above, a positive electrode of an all-solid-state battery includes a positive electrode active material, a solid electrolyte, and a conductive material, and may further include a binder for electrode sheet processing.

The movement of lithium ions in the positive electrode occurs only in the contact area between the positive electrode active material and the solid electrolyte. That is, it means that the movement of lithium ions is possible only on the contact surface between the positive electrode active material particles and the solid electrolyte particles. In addition, the solid electrolyte cannot penetrate into the positive electrode active material unlike the liquid electrolyte of the lithium secondary battery. Therefore, the movement of lithium ions is possible through the solid electrolyte in contact with the surface of the positive electrode active material particle.

In the all-solid-state battery, a crack phenomenon that particles of the positive electrode active material are destroyed, which occurs during cell manufacturing or battery use, causes serious performance degradation. Crack of the positive electrode active material include 1) crack of the positive electrode active material due to pressure (roll press, etc.) applied during electrode manufacturing, 2) crack due to structural stress as the lifespan progresses, and the like.

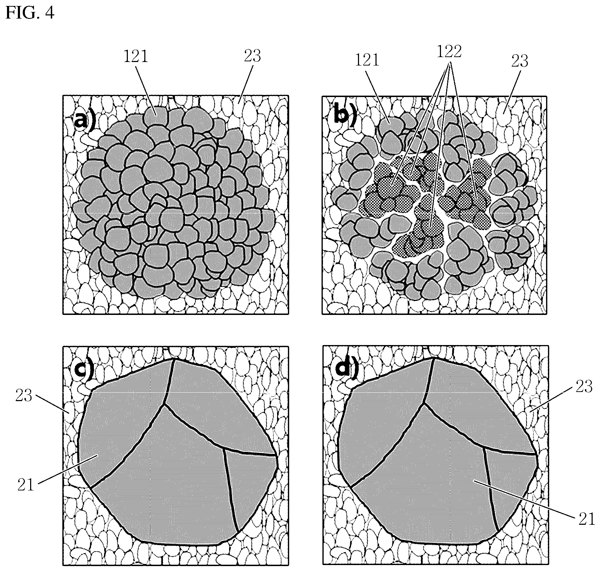

When cracks occur in the positive electrode active material particles due to complex causes as described above, the destroyed positive electrode active material 121 may have a death area 122, as shown in FIG. 4, which loses contact with the solid electrolyte 23 and exists in an isolated form inside the particle.

FIG. 4 is a view showing a change caused by stress acting on a positive electrode active material 21 or 121 for an all-solid-state battery according to the prior art and the present invention. Here, (a) and (b) show the positive electrode according to the prior art. Further, (c) and (d) show the positive electrode according to the present invention. In addition, (a) and (c) show the positive electrode before stress is applied, and (b) and (d) show the positive electrode after stress is applied.

Referring to FIG. 4, it can be seen that particles of the positive electrode active material 21 or 121 form a contact interface with the solid electrolyte 23.

As shown in (a) of FIG. 4, the conventional positive electrode active material 121 is a spherical secondary particle formed by aggregation of several hundreds of nanometers of primary particles.

Due to this, the conventional positive electrode active material 121 has weak particle strength. Thus, when stress acts on the positive electrode active material 121, cracks occur in the particles of the positive electrode active material 121 as shown in (b) of FIG. 4, which may cause the death area 122 to be formed.

When the death area 122 is formed within particles of the positive electrode active material 121, contact of the positive active material 121 particles with the solid electrolyte 23 is blocked in the death area 122. Thus, the movement of lithium ions for charging and discharging is impossible in the death area 122 of the positive electrode, so that deterioration of life characteristics such as capacity reduction occurs.

Therefore, considered in the present invention is making the positive electrode active material 21 to have high particle strength, thereby preventing cracks from occurring in the positive electrode active material 21 due to deterioration caused by physical pressure in a press process during positive electrode manufacturing and progress of battery life.

As described above, in the all-solid-state battery, due to its characteristics, the solid electrolyte 23 does not penetrate into the positive electrode active materials 21 or 121. This means that the movement of lithium ions is possible only through the particle surfaces of the positive electrode active material 21 or 121 and the solid electrolyte 23 in contact with the surface of the positive electrode active material 21 or 121. A lithium diffusion time coefficient (t) in the particle of the positive electrode active material 21 or 121 is expressed in Equation 1 below.

$$[\text{Equation 1}]$$

$$t = L^2/D$$

t: Diffusion time coefficient of lithium ions in particle
L: Diffusion distance (particle radius)
D: Diffusion coefficient

Therefore, in the all-solid-state battery, only diffusion (movement) from the surface of the positive electrode active material 21 or 121 to the center of the particle may be considered. For example, in the case of the positive electrode active materials having particle radii of L1 and L2 (L1 > L2), it can be seen from Equation 1 that the positive electrode active material with a small particle radius of L2 has a shorter diffusion time of lithium ions than the positive electrode active material with a large particle radius of L1.

As such, since a small particle radius is advantageous for lithium ion diffusion within the particle, it is advantageous for improving electrochemical characteristics including rate characteristics of the battery.

Therefore, the present invention applies the positive electrode active material 21 having a high particle strength and a small average particle size to the all-solid-state battery, so that the positive electrode active material 21 does not cause cracks as shown in (c) and (d) of FIG. 4 even by the stress acting on it. As a result, the all-solid-state battery to which the positive electrode active material 21 according to the present invention is applied can provide high discharge capacity, excellent rate characteristics, and long lifespan characteristics.

[Embodiment and Comparative Example]

In order to confirm the physical and electrochemical characteristics of the positive electrode active material for the all-solid-state battery according to the present invention, the positive electrode active materials according to an embodiment and a comparative example were prepared, respectively, and the all-solid-state battery including them were also prepared. A method for preparing the positive electrode active material according to the embodiment is only one example, and the present invention is not limited to that method.

A precursor of small particles of $Ni_aCo_bMn_c(OH)_2$ (a=0.82, b=0.12, c=0.06) with an average particle size of 4 $\mu$m was prepared using the co-precipitation method. By applying the $Ni_aCo_bMn_c(OH)_2$ precursor, positive electrode active materials having the same particle size and different particle shapes were prepared according to a comparative example and an embodiment.

Comparative Example

The $Ni_aCo_bMn_c(OH)_2$ precursor having an average particle size of 4 $\mu$m was weighed and mixed with LiOH as a lithium source in a total amount of 10 g. In addition, an excessive amount of lithium was added so that the Li/transition metal ratio was 1.05. A positive electrode active material according to the comparative example was prepared by heat-treating a mixture of the $Ni_aCo_bMn_c(OH)_2$ precursor and LiOH at 800°C in an oxygen atmosphere for 24 hours.

Embodiment

Excepting that the heat treatment temperature was changed to 900°C, a primary heat treatment was performed under the same conditions as in the comparative example to prepare a lithium metal oxide raw material as a first fired product. Next, particle aggregation was pulverized from the lithium metal oxide raw material by a ball milling process. Then, a positive electrode active material according to the embodiment was prepared by subjecting the pulverized lithium metal oxide raw material to a secondary heat treatment at 675°C in an oxygen atmosphere for 6 hours.

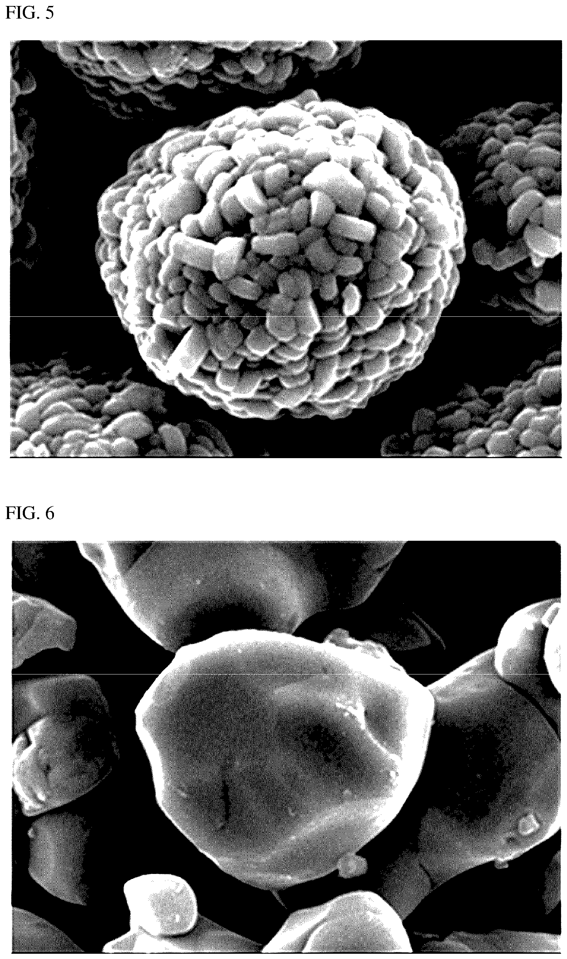

FIG. 5 is a SEM photograph showing a positive electrode active material for an all-solid-state battery according to a comparative example. FIG. 6 is a SEM photograph showing a positive electrode active material for an all-solid-state battery according to an embodiment.

Referring to FIGS. 5 and 6, the positive electrode active materials according to the comparative example and the embodiment are all spherical lithium metal oxides having an average particle diameter of about 5 $\mu$m.

In the positive electrode active material according to the comparative example, it can be seen that primary particles of several hundred nanometers are agglomerated to form a spherical secondary particle.

On the other hand, it can be seen that the positive electrode active material according to the embodiment has a single particle form in which primary particles do not exist.

The results of measuring the particle strength of the positive electrode active materials according to the comparative example and the embodiment are shown in Table 1 below.

[Table 1]

| Sample | Particle Strength (MPa) |
|---|---|
| Comparative Example | 114 |
| Embodiment | 1300 |

Referring to Table 1, it can be seen that since the positive electrode active material according to the embodiment has a single particle shape, it has a very high particle strength of 1300 MPa.

On the other hand, since the positive electrode active material according to the comparative example has a secondary particle form in which primary particles are agglomerated, a particle strength of 114 MPa, which is similar to that measured in a typical Ni-rich NCM positive electrode active material, was confirmed.

As such, it can be seen that the positive electrode active material according to the embodiment has a particle size of 5 $\mu$m level and high particle strength.

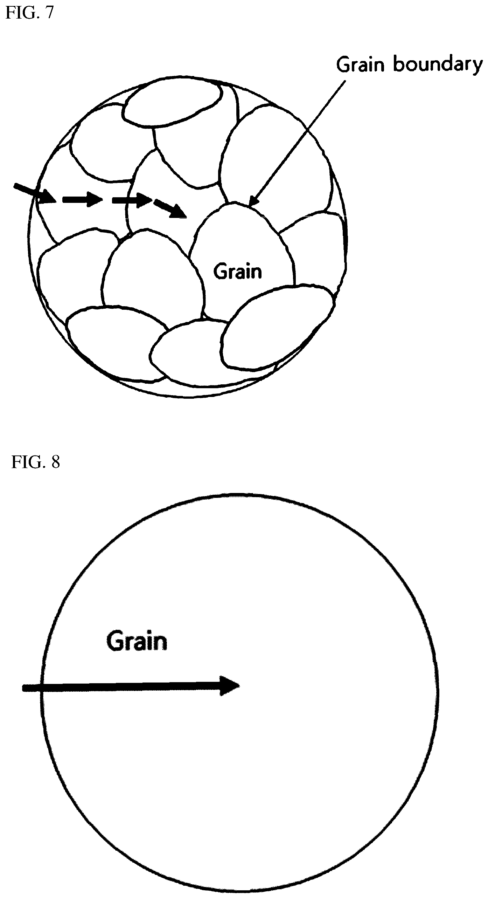

The conduction process of lithium ions in the positive electrode active material according to the comparative example and the embodiment will be described with reference to FIGS. 7 and 8. FIG. 7 is a view showing a conduction process of lithium ions in a positive electrode active material for an all-solid-state battery according to a comparative example. FIG. 8 is a view showing a conduction process of lithium ions in a positive electrode active material for an all-solid-state battery according to an embodiment.

It can be seen that the positive electrode active material according to the embodiment has a small particle size and high particle strength. In addition, since the positive electrode active material according to the embodiment has a single particle shape without secondary particles, it is possible to improve lithium ion conduction kinetics in an all-solid-state battery.

In the all-solid-state battery, as described above, the solid electrolyte cannot penetrate into the particles of the positive electrode active material. Therefore, the movement of lithium ions occurs from the surface of the positive electrode active material.

Since the positive electrode active material according to the comparative example has a particle form of a secondary particle in which primary particles are agglomerated, lithium ions are transferred while sequentially passing through grain of primary particle, grain boundary, next grain, next grain boundary, and the like as shown in FIG. 7. Therefore, the positive electrode active material according to the comparative example has a high resistance because the process of moving lithium ions is complicated.

On the other hand, since the positive electrode active material according to the embodiment has a single particle shape without grain boundary as shown in FIG. 8, lithium ions are transferred only through the grain. Therefore, the positive electrode active material according to the embodiment has a simple process of moving lithium ions, so that it has a relatively low resistance compared to the positive electrode active material according to the comparative example. As a result, the positive electrode active material according to the embodiment is expected to have excellent rate characteristics.

All-solid-state battery

All-solid-state batteries were prepared by applying the positive electrode active materials according to the embodiment and the comparative example, and electrochemical characteristics were evaluated. The all-solid-state battery used a uniaxial pressure cell generally applied to the evaluation of sulfide-based solid electrolytes. $Li_6PS_5Cl$ was used as the solid electrolyte and Super-P was used as the conductive material.

A composite was prepared by mixing the positive electrode active material, the solid electrolyte, and the conductive material in a weight ratio of 60:35:5, and 10 mg of the composite was used as the positive electrode. 100 mg of solid electrolyte was used. A Li-In alloy was used as the negative electrode.

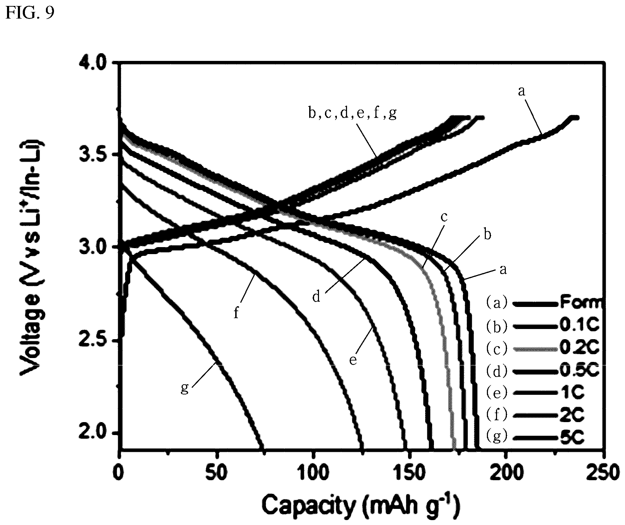

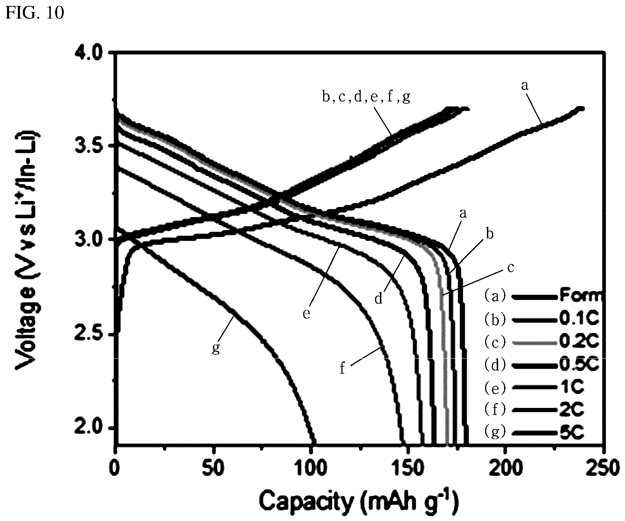

FIG. 9 is a graph showing charge and discharge curves of an all-solid-state battery including a positive electrode active material according to a comparative example. FIG. 10 is a graph showing charge and discharge curves of an all-solid-state battery including a positive electrode active material according to an embodiment. Here, FIGS. 9 and 10 show charge/discharge curves according to C-rate.

Table 2 shows the discharge capacity according to the C-rate of the all-solid-state battery according to the embodiment and the comparative example.

[Table 2]

| Discharge Capacity (mAh/g) | | |
|---|---|---|
| C-rate | Comparative Example | Embodiment |
| 0.05 C | 184.98 | 179.29 |
| 0.1 C | 179.03 | 174.16 |
| 0.2 C | 172.64 | 169.81 |
| 0.5 C | 161.16 | 163.15 |
| 1 C | 147.88 | 156.98 |
| 2C | 125.82 | 147.23 |
| 5C | 74.48 | 102.45 |

Referring to FIGS. 9, 10 and Table 2, it can be seen that the initial discharge capacity at 0.05 C was 185 mAh/g in the comparative example and 180 mAh/g in the embodiment, which was slightly higher in the comparative example, but at a similar level.

Next, the rate characteristics were evaluated, and it can be seen that the embodiment exhibits better rate characteristics than the comparative example. It is believed that this is because the positive electrode active material according to the embodiment has a single particle shape without grain boundaries, which is advantageous for the movement of lithium ions.

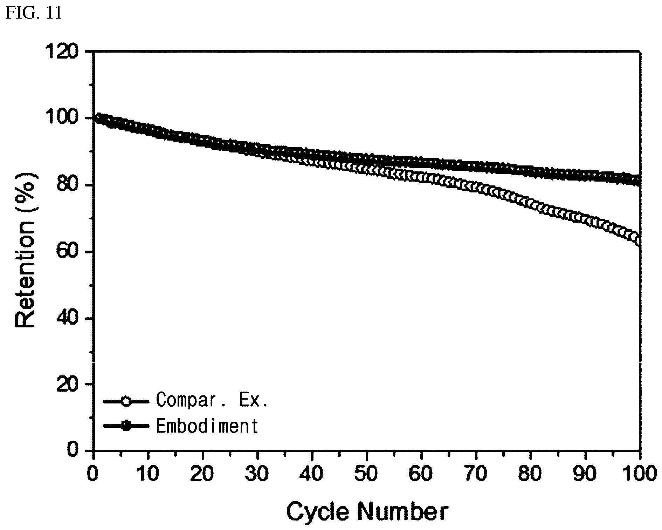

FIG. 11 is a graph showing lifespan characteristics evaluation results of all-solid-state batteries according to a comparative example and an embodiment.

Referring to FIG. 11, as a result of evaluating the lifespan characteristics after 100 charge/discharge cycles, the lifespan retention rate was 81% in the embodiment and 63% in the comparative example, indicating that the lifespan degradation was serious in the comparative example.

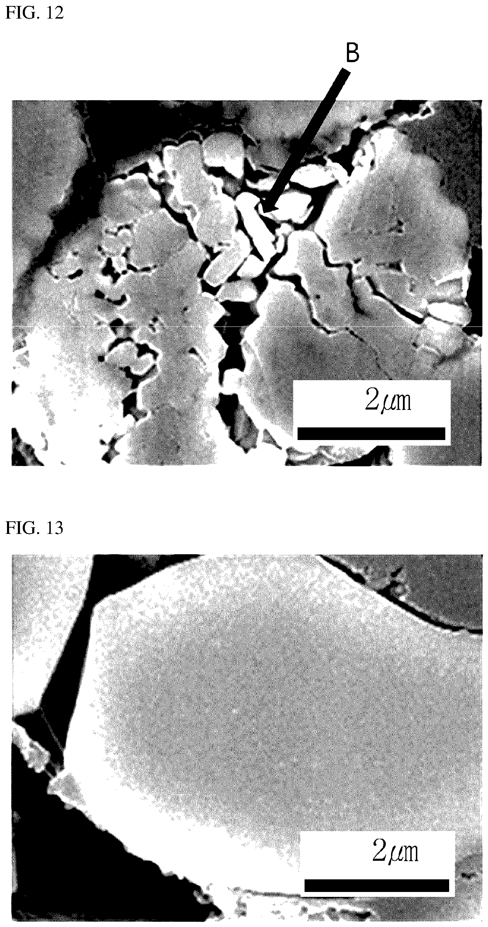

In order to determine the cause of lifespan degradation of the all-solid-state batteries according to the embodiment and the comparative example, the positive electrodes were recovered from the all-solid-state batteries whose lifespan characteristics were evaluated after 100 charge/discharge cycles. The recovered positive electrodes were subjected to cross-section processing, and SEM pictures were taken as shown in FIGS. 12 and 13. FIG. 12 is a SEM photograph showing a positive electrode active material according to a comparative example after lifespan characteristics evaluation of FIG. 11. FIG. 13 is a SEM photograph showing a positive electrode active material according to an embodiment after lifespan characteristics evaluation of FIG. 11.

Referring to FIG. 12, it can be seen that cracks occurred in the positive electrode active material particles according to the comparative example, resulting in a death area (B) without contact with the solid electrolyte.

On the other hand, it can be seen that the positive electrode according to the embodiment maintains the shape of the positive electrode active material particles well without cracking. That is, since the positive electrode active material according to the embodiment has high particle strength, cracks do not occur in the positive electrode active material particles.

Meanwhile, the embodiments disclosed in this specification and drawings are only presented as specific examples to aid understanding, and are not intended to limit the scope of the present invention. In addition to the embodiments disclosed herein, it is obvious to those skilled in the art that other modifications based on the technical idea of the present invention can be implemented.

[Reference Numerals]

10: Solid electrolyte layer
20: Positive electrode
21, 121: Positive electrode active material
23: Solid electrolyte
25: Conductive material
30: Negative electrode
100: All-solid-state battery

**Claims**

1. A positive electrode active material for an all-solid-state battery, comprising a lithium metal oxide in the form of a single particle having a particle strength of 300 to 1500 MPa and an average particle size of 10 $\mu$m or less.

2. The positive electrode active material of claim 1, wherein the lithium metal oxide is represented by Chemical Formula below:

[Chemical Formula] $Li_xM_yO_2$

(where M includes at least one selected from Co, Mn, Ni, Al, Fe, V, Zn, Cr, Ti, Ta, Mg, Mo, Zr, W, Sn, Hf, Nd, and Gd, 0<x≤1.5, and 0<y≤1).

3. The positive electrode active material of claim 2, wherein the lithium metal oxide is $LiNi_aCo_bMn_cO_2$ (0.6≤a≤0.9, a+b+c=1).

4. The positive electrode active material of claim 3, wherein the lithium metal oxide has a particle strength of 500 MPa or more and an average particle size of 1 μm to 7 μm.

5. A method of manufacturing a positive electrode active material for an all-solid-state battery, the method comprising:

preparing a lithium metal oxide raw material by mixing a transition metal composite precursor and a lithium source followed by primary heat treatment;
pulverizing the lithium metal oxide raw material; and
producing a lithium metal oxide in the form of a single particle having a particle strength of 300 to 1500 MPa and an average particle size of 10 μm or less through secondary heat treatment for the pulverized lithium metal oxide raw material.

6. The method of claim 5, wherein the transition metal composite precursor is a spherical transition metal composite hydroxide or transition metal composite carbonate prepared by a co-precipitation method.

7. The method of claim 6, wherein the lithium metal oxide raw material is secondary particles having an average particle size of 10 μm or less in which primary particles of hundreds of nanometers are agglomerated.

8. The method of claim 7, wherein the lithium metal oxide raw material in which the primary particles are agglomerated is pulverized through a ball milling process.

9. The method of claim 6, wherein the lithium metal oxide is represented by Chemical Formula below:

[Chemical Formula]     $Li_xM_yO_2$

(where M includes at least one selected from Co, Mn, Ni, Al, Fe, V, Zn, Cr, Ti, Ta, Mg, Mo, Zr, W, Sn, Hf, Nd, and Gd, $0<x\leq1.5$, and $0<y\leq1$).

10. The method of claim 9, wherein the transition metal composite precursor is $Ni_aCo_bMn_c(OH)_2$ or $Ni_aCo_bMn_cO_2$ ($0.6\leq a\leq0.9$, a+b+c=1), and
the lithium metal oxide is $LiNi_aCo_bMn_cO_2$ ($0.6\leq a\leq0.9$, a+b+c=1).

11. The method of claim 10, wherein the lithium metal oxide has a particle strength of 500 MPa or more and an average particle size of 1 μm to 7 μm.

12. A positive electrode for an all-solid-state battery, comprising:

a solid electrolyte;
a conductive material; and
a positive electrode active material of a lithium metal oxide in the form of a single particle having a particle strength of 300 to 1500 MPa and an average particle size of 10 μm or less.

13. An all-solid-state battery comprising:

a positive electrode;
a solid electrolyte layer; and
a negative electrode,
the positive electrode including:

a solid electrolyte;
a conductive material; and
a positive electrode active material of a lithium metal oxide in the form of a single particle having a particle strength of 300 to 1500 MPa and an average particle size of 10 μm or less.

FIG. 1

FIG. 2

FIG. 3

```
                    ┌─────────┐
                    │  Start  │
                    └────┬────┘
                         │
                         ▼
┌──────────────────────────────────────────────────┐
│   Prepare lithium metal oxide raw material by     │
│  mixing transition metal composite precursor and  │──S10
│  lithium source followed by primary heat treatment│
└──────────────────────┬───────────────────────────┘
                       │
                       ▼
┌──────────────────────────────────────────────────┐
│     Pulverize lithium metal oxide raw material    │──S20
└──────────────────────┬───────────────────────────┘
                       │
                       ▼
┌──────────────────────────────────────────────────┐
│      Produce lithium metal oxide in the form of   │
│    single particles by secondary heat treatment   │──S30
│    of pulverized lithium metal oxide raw material │
└──────────────────────┬───────────────────────────┘
                       │
                       ▼
                  ┌─────────┐
                  │   End   │
                  └─────────┘
```

FIG. 4

FIG. 5

FIG. 6

FIG. 7

Grain boundary

Grain

FIG. 8

Grain

FIG. 9

FIG. 10

FIG. 11

FIG. 12

FIG. 13

## INTERNATIONAL SEARCH REPORT

| | International application No. |
|---|---|
| | **PCT/KR2021/017591** |

### A. CLASSIFICATION OF SUBJECT MATTER

**H01M 4/525**(2010.01)i; **H01M 4/505**(2010.01)i; **H01M 4/131**(2010.01)i; **H01M 4/62**(2006.01)i; **H01M 10/0562**(2010.01)i; **H01M 10/052**(2010.01)i; **C01G 53/00**(2006.01)i

According to International Patent Classification (IPC) or to both national classification and IPC

### B. FIELDS SEARCHED

Minimum documentation searched (classification system followed by classification symbols)

H01M 4/525(2010.01); C01G 53/00(2006.01); H01M 10/052(2010.01); H01M 4/36(2006.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전고체 전지(all-solid battery), 양극 활물질(positive electrode active material), 단일 입자(single particle), 입자 강도(particle hardness), 입도(grain size)

### C. DOCUMENTS CONSIDERED TO BE RELEVANT

| Category* | Citation of document, with indication, where appropriate, of the relevant passages | Relevant to claim No. |
|---|---|---|
| X | KR 10-2020-0047117 A (LG CHEM, LTD.) 07 May 2020 (2020-05-07)<br>See claims 1, 7, 9-11, 17 and 18; paragraphs [0051], [0058], [0060]-[0062], [0070], [0078], [0096], [0108] and [0120]; and example 1. | 1-13 |
| X | KR 10-2020-0130819 A (SUMITOMO CHEMICAL CO., LTD.) 20 November 2020 (2020-11-20)<br>See claims 1 and 4-7; paragraphs [0048], [0049], [0198] and [0199]; and example 1. | 1-4,12,13 |
| A | JP 2020-011892 A (SUMITOMO CHEMICAL CO., LTD.) 23 January 2020 (2020-01-23)<br>See entire document. | 1-13 |
| A | KR 10-2019-0139033 A (LG CHEM, LTD.) 17 December 2019 (2019-12-17)<br>See entire document. | 1-13 |
| A | KR 10-2020-0125443 A (SAMSUNG SDI CO., LTD. et al.) 04 November 2020 (2020-11-04)<br>See entire document. | 1-13 |

| ☑ Further documents are listed in the continuation of Box C. | ☑ See patent family annex. |
|---|---|

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 March 2022** | **08 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/017591**

### C. DOCUMENTS CONSIDERED TO BE RELEVANT

| Category* | Citation of document, with indication, where appropriate, of the relevant passages | Relevant to claim No. |
|---|---|---|
| PX | JP 2021-022547 A (JX NIPPON MINING & METALS CORP.) 18 February 2021 (2021-02-18)<br>See claims 1-5; paragraphs [0013], [0014] and [0046]; and example 1. | 1-13 |

Form PCT/ISA/210 (second sheet) (July 2019)

**INTERNATIONAL SEARCH REPORT**
Information on patent family members

International application No.

**PCT/KR2021/017591**

| Patent document cited in search report | | | Publication date (day/month/year) | Patent family member(s) | | | Publication date (day/month/year) |
|---|---|---|---|---|---|---|---|
| KR | 10-2020-0047117 | A | 07 May 2020 | US | 2020-0136141 | A1 | 30 April 2020 |
| KR | 10-2020-0130819 | A | 20 November 2020 | CN | 111837268 | A | 27 October 2020 |
| | | | | EP | 3767717 | A1 | 20 January 2021 |
| | | | | JP | 2019-160573 | A | 19 September 2019 |
| | | | | US | 2021-0083286 | A1 | 18 March 2021 |
| | | | | WO | 2019-177032 | A1 | 19 September 2019 |
| JP | 2020-011892 | A | 23 January 2020 | None | | | |
| KR | 10-2019-0139033 | A | 17 December 2019 | CN | 111742431 | A | 02 October 2020 |
| | | | | EP | 3742533 | A1 | 25 November 2020 |
| | | | | JP | 2021-514524 | A | 10 June 2021 |
| | | | | KR | 10-2288292 | B1 | 10 August 2021 |
| | | | | US | 2021-0005875 | A1 | 07 January 2021 |
| | | | | WO | 2019-235885 | A1 | 12 December 2019 |
| KR | 10-2020-0125443 | A | 04 November 2020 | CN | 111864194 | A | 30 October 2020 |
| | | | | CN | 111864195 | A | 30 October 2020 |
| | | | | EP | 3733609 | A1 | 04 November 2020 |
| | | | | EP | 3733610 | A1 | 04 November 2020 |
| | | | | JP | 2020-184534 | A | 12 November 2020 |
| | | | | JP | 2020-184535 | A | 12 November 2020 |
| | | | | KR | 10-2019-0046224 | A | 07 May 2019 |
| | | | | KR | 10-2020-0125442 | A | 04 November 2020 |
| | | | | US | 2020-0251719 | A1 | 06 August 2020 |
| | | | | US | 2020-0343550 | A1 | 29 October 2020 |
| | | | | US | 2020-0343551 | A1 | 29 October 2020 |
| | | | | WO | 2019-083179 | A1 | 02 May 2019 |
| JP | 2021-022547 | A | 18 February 2021 | None | | | |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 20200021731